# EUROPÄISCHE PATENTANMELDUNG

(11) **EP 4 418 067 A1**
(43) Veröffentlichungstag der Anmeldung: **21.08.2024**
(21) Anmeldenummer: 23157106.8
(22) Anmeldetag: 16.02.2023
(51) Int. Cl.: G05D 16/10

(54) **DRUCKREGLER FÜR GASFÖRMIGEN KRAFTSTOFF, INSBESONDERE WASSERSTOFFGAS**

(71) Anmelder: Poppe & Potthoff GmbH, 33824 Werther (DE)
(72) Erfinder: JÜNTGEN, Marcus, 14612 Falkensee (DE); BUDDE, Roger, 09337 Callenberg (DE); TRAPP, Leonhard, 13597 Berlin (DE); RINDT, Andreas, 10245 Berlin (DE); SCHULZ, Steven, 15755 Schwerin (DE); BREDENKAMP, Philipp, 33617 Bielefeld (DE); SCHIPPERS, Cartsen, 33739 Bielefeld (DE)
(74) Vertreter: Bardehle Pagenberg Partnerschaft mbB Patentanwälte Rechtsanwälte

(57) **Zusammenfassung**

Die vorliegende Anmeldung betrifft einen Druckregler für einen gasförmigen Kraftstoff, insbesondere Wasserstoffgas, umfassend einen Einlass für den gasförmigen Kraftstoff bei einem Einlassdruck, einen Auslass für den gasförmigen Kraftstoff, ein Hauptventil umfassend einen Hauptventileinlass, einen Hauptventilauslass, einen Hauptventilnebeneinlass, und einen Regelkolben in einem Gehäuse, der den Kraftstofffluss vom Einlass durch das Hauptventil zum Auslass regelt; und ein elektronisch ansteuerbares Ventil, insbesondere ein Proportionalventil, das dazu eingerichtet ist, den Einlassdruck über den Hauptventilnebeneinlass auf den Regelkolben des Hauptventils als Steuerdruck abzugeben und dadurch den Kraftstofffluss, basierend zumindest auf einem Drucksensorsignal zu regeln, das den Druck des gasförmigen Kraftstoffs am Auslass des Druckreglers anzeigt, wobei das Hauptventil ferner einen Durchlass für den gasförmigen Kraftstoff umfasst, der dazu eingerichtet ist, den Steuerdruck abzubauen, der auf den Regelkolben wirkt und vorzugsweise im Regelkolben und / oder dem Gehäuse angeordnet ist.

## Beschreibung

### 1. Technisches Gebiet

Die Erfindung betrifft einen Druckregler für einen gasförmigen Kraftstoff, insbesondere für Wasserstoffgas.

### 2. Stand der Technik

Gasförmiger Kraftstoff, insbesondere Wasserstoffgas, als Energieträger wird bei mobilen Anwendungen in gasförmiger Form in Hochdruckbehältern oder in flüssiger Form in gekühlten Niederdruckbehältern gespeichert. Je nach Befüllungsgrad der Speicherbehältnisse sind ausgehend vom maximalen Füllstand des Speichers abnehmende Druckverhältnisse vorhanden, die bei fortschreitender Gasentnahme z.B. durch den Fahrbetrieb kontinuierlich sinken. Üblich sind heute im Druckgasspeicherbereich Tankdrücke von 200, 350 oder 700 bar bei 100% Behälterfüllung. Im Bereich der tiefkalten Flüssiggasspeicherung werden Tankdrücke von weniger als 20 bar verwendet.

Um den bevorrateten Kraftstoff z.B. Wasserstoff einem Verbraucher bereitstellen zu können, ist das Gas dem Speicher mit variablen Druckniveau von ca. 10 bar bis 875 bar zu entnehmen und auf einen für den Verbraucher spezifischen Druck zu konditionieren. Diese Konditionierung ist typischerweise eine Druckentspannung, die dem jeweiligen Verbraucher, z.B. eine Brennstoffzelle oder ein Wasserstoffverbrennungsmotor, angepasst sein muss. Brennstoffzellen arbeiten typischerweise mit einem Wasserstoffversorgungsdruck von ca. 9 bar, Wasserstoffverbrennungsmotoren mit Drücken bis zu 60 bar. Hierbei ist es von entscheidender Bedeutung, dass das Medium dem Verbraucher in einem kleinen Drucktoleranzfenster zur Verfügung gestellt wird, unabhängig von einem oft stark schwankenden oder sinkenden Gasmassenstrom, beispielsweise wenn der Fahrer stark beschleunigt oder abbremst. Insbesondere bei leeren Speicherzuständen des Tanks oder hohen Gasmassenströmen im Volllastbereich können durch Druckabfall in der Versorgungsleitung kein optimaler Wirkungsgrad der Brennstoffzelle oder des Verbrennungsmotors erzielt werden.

Die Druckkonditionierung in der Versorgungsleitung wird üblicherweise durch einen mechanischen Druckregler erreicht bzw. implementiert. Ein solcher mechanischer Druckregler reagiert durch ein fest eingestelltes Feder-Flächenverhältnis auf den anliegenden Tankdruck durch das Öffnen des federdruckbelasteten Ventils gegenüber der Abströmseite im Niederdruckbereich, welche ebenfalls eine Kraft auf das federdruckbelastete Ventil ausübt. Solange diese Kräfte, erzeugt durch unterschiedlich große Wirkflächen, auf der Hochdruck- und der Niederdruckseite nicht ausgeglichen sind, wird das Ventil geöffnet und es strömt Gas von der Hochdruck- auf die Niederdruckseite, auf welcher sich der Verbraucher befindet und kontinuierlich Kraftstoff / Wasserstoff abzieht. Da die Flächen in diesen mechanischen Druckreglern während des Betriebs nicht variabel sind, bewirkt der abfallende Druck im Vorratsspeicher einen im Verhältnis abfallenden Druck auf der Niederdruckseite. Somit sind mechanische Regler ohne Druckausgleich oft nicht in der Lage, eine Regelgüte von mehr als 90% zu erreichen.

Ein druckausgeglichener Regler weist eine technische Besonderheit auf. Hier wird das Problem des abfallenden Tankdrucks dadurch eliminiert, dass die dem Tankdruck konstruktiv zugewandte Fläche des Ventilelements vom Niederdruck hinterspült wird. Diese Art der mechanischen Druckregelung ist unabhängig vom Füllstand des Speicherbehälters, ist aber dadurch gekennzeichnet, dass zusätzliche Dichtelemente zwischen Hoch- und Niederdruckbereich des Reglers die Lebensdauer und die interne Leckage des Reglers negativ beeinflussen können. Solche Regler können eine Regelgüte von 95% erreichen, sind aber oft unzuverlässig und fallen daher häufig frühzeitig aus.

Mechanische Regelventile zeichnen sich ferner dadurch aus, dass eine direkte Beeinflussung des dem Verbraucher zuströmenden Mediums während des Fahrbetriebs nicht vorgenommen werden kann. Zudem sind diese Regler oft auf kleine Massendurchsätze bzw. Kraftstoffflüsse wie 3 g/s beschränkt, wie sie im Light-Vehicle-Bereich (PKW) üblich sind. Diese Beschränkung entsteht durch das konstruktionsbedingte Kraft-Flächenverhältnis des Regelventils in Kombination mit dem vorspannenden Federelement. Für größere Durchsätze wie z.B. 7 g/s (Light Duty) oder 16 g/s (Heavy Duty) wären im Hinblick auf den Druckzustand im Tank bei 350 bar oder 700 bar sehr große Flächen und sehr starke Federelemente notwendig, um die Ventile bei großem Ventilquerschnitt gegen den vollen Tankdruck noch zudrücken zu können, was die Komplexität, der Fertigungsaufwand und damit Kosten erhöht.

Ferner gibt es Regelventile mit elektronischer Regelung, die derart aufgebaut sind, dass eine ungenaue, mechanische Regelung vorgeschaltet ist, um den Tankdruck auf einen für den elektronischen Regler akzeptables Zwischendruckniveau abzubauen. Der Eingangsdruck für den in Reihe geschalteten elektronischen Regler unterliegt dabei besonders großen Druckschwankungen, die in Abhängigkeit zum Füllgrad des Speicherbehälters / Tanks stehen. Die elektronische Regelung ist durch den trotz alledem niedrigen Eingangsdruck in der Lage, eine Feinregelung für den Verbraucher vorzunehmen. Ein großer Nachteil dieser Konfiguration ist wiederum ein begrenzter Gasmassenstrom sowie ein komplexer Aufbau. Ausgangsdruckänderungen, einschließlich Massenstromänderungen, können über das Steuergerät nur im begrenzten Umfang erfolgen, da der mechanische Regler tankdruckabhängig arbeitet und nicht separat angesteuert werden kann. Der Einsatz solcher Ventile beschränkt sich daher im Wesentlichen auf den Erdgasbereich mit maximalen Tankdrücken von 200 bis 300 bar.

### 3. Zusammenfassung

Wie vorstehend diskutiert, zeigen die aus dem Stand der Technik bekannten Druckregler Defizite bei hohen Massendurchsätzen / Kraftstoffflüssen und/oder hinsichtlich ihrer Zuverlässigkeit. Ferner können sie nur schlecht auf Variabilität, wie z.B. stark variierenden Kraftstoffverbrauch bei fluktuierendes Fahrverhalten reagieren. Das von der vorliegenden Anmeldung adressierte Problem ist es diese und ähnliche Nachteile des Stands der Technik zumindest teilweise zu reduzieren.

Dieses Problem wird zumindest teilweise durch den Gegenstand der unabhängigen Ansprüche der vorliegenden Anmeldung gelöst. Beispielhafte Ausführungsformen sind in den abhängigen Ansprüchen beschrieben. Wo nicht anders angegeben sind Materialeigenschaften nach den einschlägigen Normen zu bestimmen. Ferner ist im Folgenden der Begriff "*im Wesentlichen"* als *"innerhalb typischer Konstruktions-, Mess- und* / *oder Fertigungstoleranzen"* zu verstehen.

Die vorliegende Anmeldung betrifft einen Druckregler für einen gasförmigen Kraftstoff, insbesondere Wasserstoffgas, umfassend einen Einlass für den gasförmigen Kraftstoff bei einem Einlassdruck, einen Auslass für den gasförmigen Kraftstoff, ein Hauptventil umfassend einen Hauptventileinlass, einen Hauptventilauslass, einen Hauptventilnebeneinlass, und einen Regelkolben in einem Gehäuse, der den Kraftstofffluss vom Einlass durch das Hauptventil zum Auslass regelt, und ein elektronisch ansteuerbares Ventil, insbesondere ein Proportionalventil, das dazu eingerichtet ist, Einlassdruck über den Hauptventilnebeneinlass auf den Regelkolben des Hauptventils als Steuerdruck abzugeben und dadurch den Kraftstofffluss, basierend zumindest auf einem Drucksensorsignal zu regeln, das den Druck des gasförmigen Kraftstoffs am Auslass des Druckreglers anzeigt, wobei das Hauptventil ferner einen Durchlass für den gasförmigen Kraftstoff umfasst, der dazu eingerichtet ist, den Steuerdruck abzubauen, der auf den Regelkolben wirkt und vorzugsweise im Regelkolben und / oder dem Gehäuse angeordnet ist.

Beispielsweise kann der Durchlass im Regelkolbenboden, im Umfang des Regelkolbens und/oder als Bypass in einem Führungsringsystem angeordnet sein. Ein solcher in oder am Regelkolben integrierter Durchlass verbessert das Ansprechverhalten des Regelkolbens auf Änderungen des Steuerdrucks, ohne den Aufbau des Druckreglers zu verkomplizieren. Ein weiter Vorteil dieser Anordnung liegt darin, dass die mechanische Konstruktion des Regelkolbens das dynamische Ansprechverhalten des Druckreglers wesentlich mitbestimmt. Das erlaubt es Druckregler an unterschiedliche Anforderungen dadurch anzupassen, dass Regelkolben mit unterschiedlichen Durchlässen verbaut werden.

Alternativ oder zusätzlich lässt sich der Durchlass auch über ein in den Regelkolben integriertes Rückschlagventil, über einen Filter, einen Spalt zwischen Regelkolben und Gehäusewand und / oder über einen oder mehrere Kanäle in der Wand des Regelkolbens oder in der Gehäusewand implementiert ist, und / oder über einen Strömungspad infolge einer Oberflächenrauheit der Wand des Regelkolbens und/ oder der Gehäusewand.

Der hierin beschriebene Druckregler kann damit im Wesentlichen unabhängig vom Eingangsdruck arbeiten, was beispielsweise bei mechanischen Reglern bzw. mechanischen Regelstufen nicht der Fall ist. Ferner kann der Druckregler über ein Motorsteuergerät angesteuert und konfigurier werden, um den Druck und den Massenstrom bzw. den Kraftstofffluss gemäß anpassbaren Sollwerten für den Druck und den Massestrom zu regeln.

Im Betrieb führt ein erhöhter Kraftstoffverbrauch des Abnehmers (z.B. einer Brennstoffzelle) zu einem Druckabfall am Auslass des Druckreglers, der von dem Drucksensorsignal angezeigt wird und zu einer Öffnung des elektronisch ansteuerbaren Ventils. Dadurch wird der Regelkolben gesteuert, den Fluss durch das Hauptventil zu erhöhen, bis der Auslassdruck wieder dem Sollwert entspricht. Ein geringerer Kraftstoffverbrauch führt dementsprechend zu einem Druckanstieg am Auslass und dadurch zu einem Schließen des elektronisch ansteuerbaren Ventils. In diesem Fall führt der Durchlass des Regelkolbens dazu, dass der Regelkolben möglichst schnell auf das reduzierte Drucksteuersignal reagieren kann und verbessert dadurch das Ansprechverhalten, die Bandbreite und die Sprungantwort des Regelkreises.

Der hierin beschriebene Druckregler besitzt ferner ein besonders schnelles Ansprechverhalten im Lastwechselfall. Diese Eigenschaft wird unter anderem durch die hier beschriebene Ausführung des Regelkolbens erzielt. Der Regelkolben befindet sich vorzugsweise in einer Zylinderführung mit minimalem Volumen oberhalb des Kolbens, wodurch eine Ansteuerung in Form der Gaszugabe durch das elektronisch ansteuerbare Ventil direkt in einer Lageänderung des Kolbens resultiert. Verringert sich der Fluss durch das elektronisch ansteuerbare Steuerventil (vorzugsweise als elektromagnetisches Proportionalventil ausgeführt) kann sich der Steuerdruck rasch über den Durchlass des Regelkolbens wieder abbauen.

Der hier beschriebene Druckregler kann hohe Masse- bzw. Kraftstoffströme bei gleichzeitig stark variablen Druckbereichen bereitstellen und den Ausgangsdruck bei stark variierenden Masse- bzw. Kraftstoffströme mit hoher Genauigkeit konstant halten. Im Gegensatz zu vorbekannten Druckreglern ist er nicht auf Massendurchsätze von 3 g/s beschränkt. Seine Kapazität liegt oberhalb von 10 g/s, abhängig von Restfülldruck des Tanks. Bei Restfülldrücken von 30 bar oder mehr sind bis zu 20 g/s Massenstrom möglich, ohne einen konstruktiven Eingriff in die bestehende Baugruppe vornehmen zu müssen. Der hier beschriebene Druckregler ist einstufig ausgeführt und kann damit auf ein vorgeschaltetes mechanisches Druckregelventil verzichten.

Der hier beschriebene Druckregler kann den Druck des druckgespeicherten gasförmigen Kraftstoffs nutzen, indem er den Tankdruck über das elektronisch ansteuerbare Ventil dosiert als Steuerdruck auf den Regelkolben des Hauptventils abgibt. Diese Art der pneumatischen Ventilansteuerung gewährleistet eine besonders genaue Steuerung des Ausgangsdrucksignals. In Realgasversuchen konnte eine Regelgüte von über 99% bei Eingangsdrücken von bis zu 860 bar und üblichen Ausgangsdrücken zwischen 9 bar und 40 bar von dem hier beschriebenen Druckregler erreicht werden. Bei sehr kleinen Ausgangsdrücken von weniger als 3 bar konnten Regelgüten von ca. 90 - 95% erreicht werden. Der hier beschriebene Druckregler kann mit variablen Ausgangsdruckniveaus von 1 bar bis 60 bar arbeiten.

Ein weiterer Vorteil des hierin beschriebenen Druckreglers ist, dass er derart aufgebaut sein kann, dass applikationsbedingt eine Anpassung an die Rahmenbedingungen wie z.B. Material- und/oder Bauraumanforderungen, sowie die Einbindung zusätzlicher Komponenten, z.B. wie hierin beschrieben, möglich ist, ohne unnötig viele Komponenten austauschen zu müssen oder den Grundaufbau des Druckreglers verändern zu müssen. Durch solche Anpassungen an die jeweiligen Gegebenheiten können Regelgüten von über 99% auch bei sehr kleinen Ausgangsdrücken oder Massenströmen erzielt werden. Die Konstruktion des Regelkolbens und des Durchlasses führen ferner dazu, dass der der Druckregler sehr schnell an sich ändernde Druck und Durchflussanforderungen reagieren kann. Dadurch wird die Regelbandbreite erhöht, was die Regelgüte verbessert, Druckschwingungen verringert und das Sprungantwortverhalten des Reglers bzw. des Regelkreises z.B. bei starker und instantaner Lastanforderung verbessert.

Der hier beschriebene Druckregler ist ferner lageunabhängig verbaubar, insbesondere kann er für stationäre oder mobile Anwendungen mit besonders hohen Verbrauchsdurchsätzen parallelgeschaltet eingesetzt werden, ohne dass eine negative Beeinflussung der anderen Regler oder des Ausgangsdrucksignals eintritt. Der Druckregler ist für Druckgasspeichersysteme, Flüssiggasspeichersysteme sowie alle anderen Arten der Wasserstoff- oder Alternativgasbehandlungen einsetzbar. Über alle Einsatzbereiche stellt der Regler eine sehr robuste Lösung dar, dass keine regelmäßige Wartung des Druckreglers notwendig ist.

Um die Ansprechzeit des Regelkolbens auf eine Änderung des Steuerdrucks möglichst gering zu halten und damit die Regelbandbreite des Regelkreises zu erhöhen, kann das ein Volumen zwischen einer Oberfläche des Regelkolbens, auf die der Steuerdruck wirkt und einem Gehäuse in dem sich der Regelkolben bewegt, im geschlossenen Zustand, in einem Bereich von 100 mm^3 bis 1000 mm^3 liegen, bevorzugt in einem Bereich zwischen 300 mm^3 und 700 mm^3. Alternativ oder zusätzlich kann ein Volumen einer Verbindungsbohrung vom Auslass des elektronisch ansteuerbaren Ventils zum Nebeneinlass des Hauptventils im Bereich zwischen 40 mm^3 und 500 mm^3, bevorzugt im Bereich zwischen 100 mm^3 und 250 mm^3 liegen. Alternativ oder zusätzlich kann ein Ausgangsvolumen des elektronisch ansteuerbaren Ventils im Bereich zwischen 400 mm^3 und 1200 mm^3, bevorzugt im Bereich zwischen 650 mm^3 und 950 mm^3 liegen.

Der Druckregler kann ferner so gestaltet sein, dass ein Durchmesser einer Oberfläche des Regelkolbens, die dem Steuerdruck ausgesetzt ist im Bereich von 30 mm bis 50 mm liegt. Diese verhältnismäßig große Fläche ermöglicht eine genaue Regulierung des Drucks. Der Absperrkörper des Hauptventils kann z.B. einen Durchmesser von 2 mm bis 6 mm haben. Das dadurch ermöglichte Flächenverhältnis, d.h. zwischen Regelkolben und Absperrkörper verbessert die Regelgüte weiter. Ausführungsformen des hier beschriebene Druckreglers umfassen Druckregler mit nicht kreisförmigen Regelkolben- und/oder Absperrkörperquerschnitten. Deren Querschnitte weisen vergleichbare Flächengrößen auf wie hierin in Bezug auf beispielhafte zylindrische Regelkolben und Absperrkörper mit kreisförmigem Querschnitt beschrieben sind.

Der Druckregler kann ferner so ausgebildet sein, dass der Durchlass ein Drosselelement umfasst, das beeinflusst, wie der Steuerdruck abgebaut wird, wobei das Drosselelement vorzugsweise einstellbar sein kann und damit z.B. den effektiven Leitungsquerschnitt des Durchlasses verändern kann. Damit ist eine genaue Abstimmung des Ansprechverhaltens des Regelkolbens auf die vorgesehene Verwendung des Druckreglers möglich.

Das Hauptventil des Druckreglers kann beispielsweise dazu eingerichtet sein, eine variable Kraftstoffflussrate im Bereich von 0.02 g/s bis 50 g/s einzustellen. Eine variable Kraftstoffflussrate erlaubt es den Regler situationsabhängig und an den ggf. stark schwankenden Bedarf eines nachgeschalteten kraftstoffverbrauchenden Elements, z.B. einer Brennstoffzelle, einer Gasturbine oder einem Verbrennungsmotor angepasst zu betreiben.

Der Druckregler kann in einer beispielhaften Ausführungsform ferner eine Vorrichtung zur Temperaturkontrolle mittels Beheizung und/oder Kühlung umfassen. Eine solche Temperaturkontrolle stellt einen vorteilhaften zusätzlichen Sicherheitsmechanismus dar. Insbesondere bei der Arbeit mit gasförmigen Kraftstoffen können ungewollte Temperaturveränderungen vorkommen, denen mit einer entsprechenden Vorrichtung zur Temperaturkontrolle vorgebeugt und/oder entgegengewirkt werden kann. Eine möglichst konstante Temperatur verringert mechanische Ausdehnung / Kontraktion der Komponenten des Druckreglers und führt dazu zu einer verbesserten Betriebsstabilität des Reglers.

Dabei können beispielsweise zwei Komponenten gekühlt und/oder geheizt werden: erstens der Druckregler selbst, um bei tiefen Medientemperaturen am Eingang oder tiefen/hohen Umgebungstemperaturen durch Motorwärme oder Atmosphärenbedingungen die Funktionsfähigkeit zu gewährleisten und zweitens das austretende Gas am Auslass zur Vorkonditionierung, um eine möglichst hohe Effektivität/ Wirkungsgrad des Energieerzeugers zu gewährleisten.

Der Druckregler kann beispielsweise so eingerichtet sein, dass die Vorrichtung zur Temperaturkontrolle Kühlkanäle im Bereich eines Hauptventilkörpers des Hauptventils zur flüssigkeitsbasierten Kühlung des Hauptventils und/oder eine elektrische Heizung zum Beheizen des Hauptventils umfasst.

Die dadurch ermöglichte optionale Temperierung des Druckreglers kann z.B. über einen aufgesetzten Flansch erfolgen, der optional zugleich den Deckel des Hauptventilgehäuses darstellt. Dieser Deckel kann z.B. entweder elektrisch beheizt oder über Kühlrippen und Flüssigkeitskanäle, angeschlossen an den Kühlkreislauf des Fahrzeugs / des Aggregats, konditioniert. Eine wie oben beschriebene Temperaturkonditionierung kann in einer besonderen Art der Gehäuseausführung direkt über Kühlrippen und Kühlkanäle im Gehäusebereich abgebildet sein, ähnlich dem Aufbau eines flüssigkeitsgekühlten Zylinderkopfes im Bereich einer Brennkraftmaschine.

Eine beispielhafte Ausführungsform des Druckreglers kann ferner eine Regelungseinheit umfassen, die das elektronisch ansteuerbare Ventil, zumindest teilweise basierend auf dem zumindest einen Drucksensorsignal steuert, bevorzugt unter Verwendung von Pulsweitenmodulation (PWM). Über ein PWM-Signal, dass von der Regelungseinheit erzeugt wird, kann man z.B. den Hub des Ventils einstellen. Vorzugsweise kommt dabei ein Proportionalventil zum Einsatz und die Frequenz der PWM ist groß genug (z.B. >300 Hz oder > 1kHz), dass das Proportionalventil als Tiefpassfilter für das PWM-Signal wirken kann. Dadurch kann vermieden werden, dass das PWM-Signal zu Schwankungen des Drucksteuersignals führt, das auf den Regelkolben wirkt. Die Verwendung eines Proportionalventils hat den zusätzlichen Vorteil, dass der Absperrkörper des Proportionalventils den Dichtsitz im Betrieb nur selten berührt und dadurch der Verschleiß signifikant reduziert wird - beispielsweise im Vergleich zu einem elektronisch ansteuerbarem Absperrventil. Der Druckregler kann neben dem zumindest einen Drucksensorsignal, dass den Auslassdruck anzeigt weitere Signale wie ein Einlassdrucksignal berücksichtigen. Ferner kann die Regelungseinheit ihre Regelparamater (z.B. Regelverstärkung, Art der Regelung, etc.) basierend auf einem Signal anpassen, was den von einem Abnehmer angeforderten Masse- bzw. Kraftstoffstrom anzeigt.

Eine solche Regelungseinheit ermöglicht es, den Druckregler an besondere Betriebszustände (z.B. Volllast beim Betrieb eines Wasserstoffverbrennungsmotors) angepasst zu betreiben: Zum Beispiel kann über eine Druckerhöhung im Niederdruckbereich vor der Einspritzdüse dem Motor kurzfristig mehr Kraftstoff zugeführt werden. Für eine beispielhafte Reichenweitenextenderprogrammierung ist eine Abstufung der maximal zur Verfügung stehenden Abnahmemenge möglich. Der Druckregler kann ferner im Lastwechselfall elektronisch vorgesteuert werden, um z.B. das Hauptventil vorzeitig zu schließen und dadurch Kraftstoff einzusparen.

Der Druckregler kann ferner mindestens einen Temperatursensor zur Temperaturerfassung des gasförmigen Kraftstoffs im Druckregler umfassen. Eine entsprechende Temperaturmessung ist insbesondere in Kombination mit den hierin Vorrichtungen zur Temperaturkontrolle mittels Beheizung und/oder Kühlung vorteilhaft. Alternativ oder zusätzlich stellt eine solche Temperaturerfassung einen vorteilhaften Sicherheitsmechanismus dar, beispielsweise, um im Falle eines Überhitzens oder eines ungewollten Temperaturabfalls ein Warnsignal ausgeben zu können und/oder anderweitig reagieren zu können.

In einem weiteren Beispiel kann das elektronisch ansteuerbare Ventil des Druckreglers einen maximalen Hub von bis zu 15 mm aufweisen, bevorzugt von bis zu 10 mm, noch mehr bevorzugt von bis zu 5 mm. Dadurch kann eine kontrollierte Gaszufuhr ohne Pulsationsstörungen in der Steuerleitung erreicht werden.

Beispielsweise kann das elektronisch ansteuerbare Ventil dazu eingerichtet sein, Drücke von bis zu 1500 bar, bis zu 1200 bar, bis zu 1000 bar oder bis zu 700 bar im Proportionalventilgehäuse selbst aufzunehmen. Das elektronisch ansteuerbare Ventil kann damit in der Lage sein, entsprechenden Innendrücken zu widerstehen, ohne dabei zu bersten und der Einlassdruck kann direkt über das elektronisch ansteuerbare Ventil als Steuerdruck an den Regelkolben abgegeben werden.

Der Druckregler kann ferner eine oder mehrere der folgenden Komponenten umfassen: ein Überdruckventil, das im Strömungspfad nach dem Hauptventil angeordnet ist und bei einem Druck öffnet, der größer ist als der regelbare Ausgangsdruck des Druckreglers, bevorzugt bei einem Druck von über 30 bar oder über 70 bar, eine Service Interface Unit, SIU, die im Strömungspfad nach dem Hauptventil angeordnet ist, und eine elektronisch ansteuerbares Belüftungsventil, das im Strömungspfad nach dem Hauptventil angeordnet ist. Auf diese Weise lässt sich der Druckregler auch automatisch belüften und es ist sichergestellt, dass im Fehlerfall der Ausgangsdruck nicht so groß wird, dass er nachgelagerte Baugruppen, wie eine Brennstoffzelle, beschädigen kann. Um die Sicherheit des Druckreglers weiter zu verbessern, können alle Ventile des Druckreglers in einer NC-Konfiguration (NC: *normally closed*) vorliegen.

Um die Regelgenauigkeit bzw. -güte und die Funktionsintegration weiter zu verbessern und / oder um on-line Diagnostik zu ermöglichen, kann der Druckregler ferner ein oder mehrere der folgenden Komponenten umfassend: einen Drucksensor zum Messen eines Drucks des gasförmigen Kraftstoffs am Auslass, der das Drucksensorsignal bereitstellt, einen Drucksensor zum Messen des Drucks des gasförmigen Kraftstoffs am Einlass, der ein weiters Drucksensorsignal bereitstellt, das zum Regeln des Kraftstoffflusses verwendet werden kann; und / oder einen weiteren Drucksensor zum Messen eines Drucks des gasförmigen Kraftstoffs am Auslass, der ein weiteres Drucksensorsignal zur Signalabsicherung bereitstellt.

### 4. Kurzbeschreibung der Zeichnungen

Fig. 1 zeigt eine schematische Darstellung einer Ausführungsform eines Druckreglers
Fig. 2a zeigt eine schematische Detailansicht des Proportionalventils der Ausführungsform eines Druckreglers aus Fig. 1.
Fig. 2b zeigt eine schematische Detailansicht des Hauptventils der Ausführungsform eines Druckreglers aus Fig. 1.

### 5. Beschreibung einer beispielhaften Ausführungsform

Im Folgenden wird eine Ausführungsform der vorliegenden Offenbarung beispielhaft beschrieben. Hierbei sind verschiedenen Merkmalskombinationen mit Bezugnahme auf die dargestellten Ausführungsformen beschrieben. Naturgemäß müssen nicht alle Merkmale der beschriebenen Ausführungsformen vorhanden sein, um die vorliegende Erfindung zu realisieren. Ferner können die Ausführungsformen durch Kombinieren gewisser Merkmale einer Ausführungsform mit einem oder mehreren Merkmalen einer anderen Ausführungsform modifiziert werden - falls dies technisch kompatibel und sinnvoll ist - ohne von der Offenbarung und dem Schutzumfang der vorliegenden Erfindung abzuweichen, der durch die Patentansprüche definiert ist. Einige Merkmale, Funktionen und Eigenschaften des Druckreglers, die bereits allgemein im Abschnitt 3 beschrieben sind im Folgenden nur kurz erwähnt oder gar nicht beschrieben, um Wiederholungen zu vermeiden.

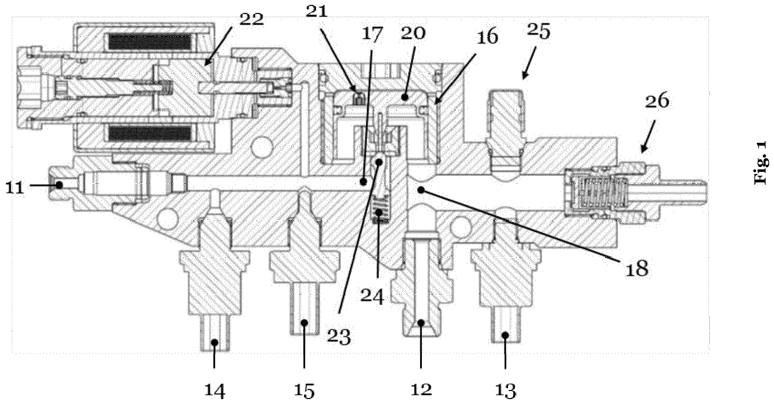

Fig. 1 zeigt eine schematische Darstellung einer Ausführungsform eines Druckreglers 1, der einen Einlass 11, einen Auslass 12, einen ersten Drucksensor 13 zum Messen des Drucks des gasförmigen Kraftstoffs am Auslass 12, einen zweiten Drucksensor 14 zum Messen des Drucks des gasförmigen Kraftstoffs am Einlass 11, und einen Temperatursensor 15 umfasst, die jeweils am Grundkörper des Druckreglers 1 angebracht sind. Ausführungsformen ohne einige oder ohne alle der dargestellten Sensoren sind ebenfalls möglich. Z.B. kann der Auslassdruck auch am Einlass eines nachgeschalteten Verbrauchers oder in einer Verteilerbaugruppe gemessen werden.

Der Einlass 11 und der Auslass 12 sind durch eine Leitung durch den Grundkörper des Druckreglers 1 mit einem Hauptventil 16 verbunden. Das Hauptventil 16 umfasst einen Hauptventileinlass 17, einen Hauptventilauslass 18, einen Hauptventilnebeneinlass (nicht in der Schnittebene), und einen im Hauptventil 16 beweglichen Regelkolben 20 zum Regeln des Kraftstoffflusses durch das Hauptventil 16.

Dabei versperrt der Regelkolben 20 in einer geschlossenen Stellung einen Pfad zwischen Hauptventileinlass 17 und Hauptventilauslass 18, sodass kein Gas vom Hauptventileinlass 17 zum Hauptventilauslass 18 strömen kann. Der Regelkolben 20 gibt in einer geöffneten Stellung einen Pfad zwischen Hauptventileinlass 17 und Hauptventilauslass 18 frei, sodass Gas vom Hauptventileinlass 17 zum Hauptventilauslass 18 strömen kann.

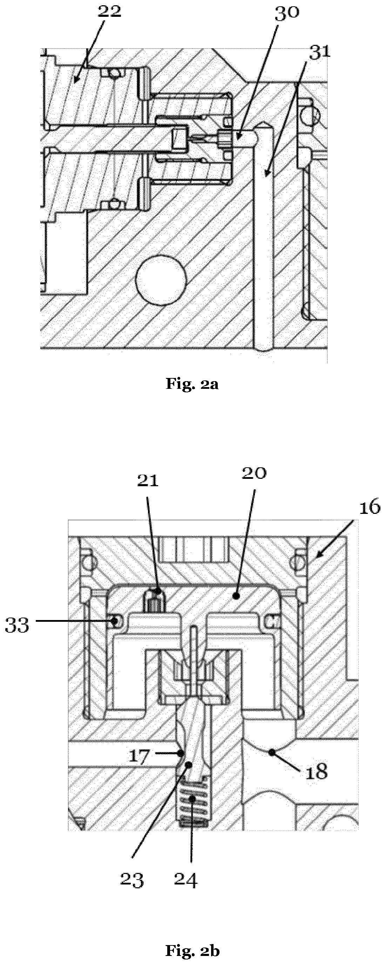

Der Regelkolben 20 steuert den Kraftstofffluss, indem er einen Absperrkörper 23 gegen die Feder 24 bewegt. Der Absperrkörper 23 löst sich dadurch vom Dichtsitz des Hauptventils 16 und gibt einen Strömungspfad vom Hauptventileinlass 17 zum Hauptventilauslass 18 frei. Im Betrieb wird der Absperrkörper 23 nicht nur durch die Feder 24 gegen den Dichtsitz des Hauptventils gedrückt, sondern auch durch den Druck des Kraftstoffs am Einlass 17. Je weiter der Regelkolben 20 in Richtung der Feder 24 verschoben ist, desto größer wird der effektive Strömungsquerschnitt durch das Hauptventil. Dadurch ist das Hauptventil 16 dazu eingerichtet, den Gasfluss zwischen Einlass 11 und Auslass 12 des Druckreglers 1 zu steuern. Der dargestellte Druckregler 1 umfasst ferner ein elektromagnetisches Proportionalventil 22, das dazu eingerichtet ist, den Einlassdruck über den Hauptventilnebeneinlass auf den Regelkolben 20 des Hauptventils 16 als Steuerdruck abzugeben (siehe auch Fig. 2a).

Der Regelkolben 20 umfasst weiterhin einen Durchlass 21 (in der gezeigten Ausführungsform umfassend ein einstellbares Drosselelement) für den gasförmigen Kraftstoff, der dazu eingerichtet ist, den Steuerdruck, der auf den Regelkolben 20 wirkt abzubauen, damit dieser sich wieder in die geschlossene Position bewegen kann, wenn der Steuerdruck reduziert wird. Dies ist im Detail in Fig. 2b gezeigt. Ein stärkerer elektrischer Stromfluss durch die Magnetspulen des Proportionalventils 22 führt dazu das auf den Regelkolben 20 ein größerer Steuerdruck wirkt, der dadurch den Durchfluss durch das Hauptventil vergrößert. Vorteilhafte Abmessungen des Regelkolbens 22 und des Absperrkörpers 23 sowie weitere Möglichkeiten den Durchfluss zu implementieren sind in Abschnitt 3 beschrieben.

Der Druckregler 1 kann ferner eine Regelungseinheit (nicht dargestellt) umfassen (oder mit einer solchen verbunden sein), die das Proportionalventil 22, zumindest teilweise basierend auf einem Drucksensorsignal steuert, das von dem Drucksensor 13 im Auslassbereich des Druckreglers erzeugt wird. Die Regelungseinheit vergleicht das Drucksensorsignal mit einem Sollwert für den Auslassdruck und ändert bei einer Abweichung vom Sollwert den Stromfluss durch die Magnetspulen des Proportionalventils 22, um den Steuerdruck auf den Regelkolben 22 zu erhöhen oder zu reduzieren. Dadurch wird auch der Kraftstofffluss durch das Hauptventil 16 erhöht oder reduziert, um dadurch die Abweichung vom Sollwert zu reduzieren. Im Betrieb und bei geschlossenem Regelkreis führt beispielsweise ein stärkerer Kraftstoffverbrauch eines Abnehmers zu einem geringeren Druck im Auslassbereich 18.

Die Ansteuerung des Proportionalventils 22 erfolgt dabei beispielsweise über Pulsweitenmodulation (PWM). Über die Pulsweite des PWM-Signals, dass von der Regelungseinheit erzeugt wird, kann der Hub des Proportionalventils 22 und damit der Steuerdruck auf den Regelkolben 22 eingestellt werden. Eine Änderung der Pulsweite des PWM-Signals bewirkt, dass der Absperrkörper des Proportionalventils 22 in Richtung des Dichtsitzes oder davon wegbewegt wird. Auf diese Weise lässt sich der einstellbare Steuerdruck auf den Regelkolben anlegen. Vorzugsweise ist die Frequenz des PWM-Signals groß genug (z.B. >300 Hz oder > 1kHz), dass das Proportionalventil 22 als Tiefpassfilter für das PWM-Signal wirken kann. Dadurch kann vermieden werden, dass das PWM-Signal zu Schwankungen des Steuerdrucks führt, der auf den Regelkolben 20 wirkt.

Die Verwendung eines Proportionalventils 22 hat den zusätzlichen Vorteil, dass der Absperrkörper des Proportionalventils 22 den Dichtsitz im Betrieb nur selten berührt und dadurch der Verschleiß signifikant reduziert wird - beispielsweise im Vergleich zu einem elektronisch ansteuerbarem Absperrventil, das entweder geschlossen oder geöffnet ist. Der Druckregler 1 kann neben dem Signal des Drucksensors 13 auch weitere Signale wie ein Einlassdrucksignal des Sensors 14 berücksichtigen. Ferner kann die Regelungseinheit ihre Regelparamater und damit die Übertragungsfunktion basierend auf einem Signal anpassen, das den von einem Abnehmer angeforderten Masse- bzw. Kraftstoffstrom anzeigt.

Der Druckregler 1 kann ferner ein Überdruckventil 26 auf der Auslassseite umfassen, dessen Auslösedruck entsprechend des Einsatzgebiets des Druckreglers 1 angepasst werden kann. Der Druckregler 1 kann auch eine Service Interface Unit (SIU) 25 umfassen. Die SIU 25 ist in der Ausführungsform von Fig. 1 mit einer abnehmbaren Kappe versehen. Nach Abnahme der Kappe kann ein Standardschlauch an der SIU 25 angebracht werden, z.B. mit einem Gewinde. Der Standardschlauch kann einen zentral und axial positionierten Dorn aufweisen, der dazu eingerichtet ist, ein federbelastetes Dichtelement der SIU 25 aus seiner Grundstellung zu bewegen, so dass Gas aus dem Auslassbereich des Druckreglers kontrolliert durch den Schlauch abgeleitet werden kann.

Der Druckregler 1 kann ferner ein aktives Spülventil (nicht gezeigt) umfassen. Das aktive Spülventil kann alternativ zur SIU 25 an dessen Position angeordnet sein. Das aktive Spülventil kann z.B. elektromagnetisch aktivierbar sein und kann z.B. nach Stoppen eines Motors, der an den Druckregler 1 angeschlossen ist, für einen kurzen Zeitraum, z.B. wenige Sekunden, geöffnet werden, um verbliebenen Kraftstoff aus dem Druckregler 1 abzulassen. Der Druckregler 1 ermöglicht durch die Integration der SIU 25 und/oder des Spülventils (nicht gezeigt) eine gezielte Belüftung des Nieder- und Hochdruckbereichs für den Servicefall. Der Druckregler 1 kann dadurch mit einem Shut-Off-Mechanismus versehen werden.

Der Druckregler 1 ermöglich durch die Integration der SIU 25 zudem den gezielten Druckabbau in der Niederdruckleitung zwischen Druckregler 1 und Verbraucher nach dem Abschalten des Systems sowie den gesteuerten Druckabbau bei längerer Standzeit. Der beispielhafte Druckregler 1 ist derart aufgebaut, dass alle integrierten Ventile in einer NC-Konfiguration vorliegen (*normally closed*)*,* was zu erhöhter Sicherheit im Schadensfall führt. Die Funktion und die Verwendung des Temperatursensors 15 ist genauer in Abschnitt 3 dargestellt.

Fig. 2a zeigt eine schematische Detailansicht des Proportionalventils 22 der Ausführungsform eines Druckreglers 1 aus Fig. 1. Der Proportionalventileinlass 30 ist über eine senkrechte Zuleitung 31 mit dem Einlass 11 des Druckreglers 1 verbunden. Wie vorstehend in Abschnitt 3 und bei Fig. 1 beschrieben, ist das Proportionalventil 22 eingerichtet, den am Einlass 30 anliegenden Druck über eine Leitung im Grundkörper des Druckreglers 1 (nicht in der Schnittebene) als Steuerdruck auf die Oberseite des Regelkolbens 20 des Hauptventils 16 zu leiten.

Fig. 2b zeigt eine schematische Detailansicht des Hauptventils 16 des Druckreglers 1 aus Fig. 1**.** In Fig. 2b ist insbesondere zu erkennen, dass der Durchlass 21 mit einem Drosselelement im Kolbenboden des Regelkolbens 20 angeordnet ist, über die der Strömungsquerschnitt des Durchlasses 21 einstellbar ist. Andere Ausführungsformen des Durchlasses 21 des Regelkolbens 20 sind vorstehend in Abschnitt 3 beschrieben. Beispielswiese könnte der Durchlass 21 auch im Führungsringsystem 33 des Regelkolbens 20 integriert sein, oder der Regelkoben 20 kann an seiner Außenwand längliche Kanäle aufweisen oder die Gehäusewand kann längliche Kanäle aufweisen. Ferner sind in Fig. 2b der Absperrkörper 23 in geschlossener Position und die Feder 24 dargestellt. Da die Oberfläche des Regelkolbens 20 wie in Abschnitt 3 näher beschrieben wesentlich größer ist als die Oberfläche des Absperrkörpers 23, kann der Steuerdruck wesentlich geringer sein als der Einlassdruck, der den Absperrkörper 23 gegen den Dichtsitz des Hauptventils 16 drückt. Insbesondere kann der Durchmesser der Oberfläche des Regelkolbens 20, die dem Steuerdruck ausgesetzt ist im Bereich von 30 mm bis 50 mm liegen und / oder der effektive Durchmesser der Oberfläche eines Absperrkörpers 23 des Hauptventils 16, die dem Einlassdruck ausgesetzt ist, im Bereich von 1 mm bis 10 mm liegen, bevorzugt im Bereich von 2 mm bis 6 mm. Das Volumen zwischen der Oberfläche des Regelkolbens 20, auf die der Steuerdruck wirkt und dem Gehäuse, in dem sich der Regelkolben 20 bewegt kann im geschlossenen Zustand in einem Bereich von 100 mm^3 bis 1000 mm^3 und bevorzugt in einem Bereich zwischen 300 mm^3 und 700 mm^3 liegen.

Wesentliche Aspekte der Funktionsweise einiger Ausführungsformen des hier beschriebenen Druckreglers 1 lassen sich unter Verwendung ähnlicher Begriffe auch wie folgt charakterisieren:
Druckregler 1 mit einem Zulauf 11 und einen Ablauf 12, zwischen denen ein erster Strömungsweg und ein zweiter Strömungsweg angeordnet sind, einen Absperrkörper 23 zum Öffnen und Schließen des ersten Strömungsweges und einer steuerbaren Ventileinrichtung 22 zum Öffnen und Schließen des zweiten Strömungsweges, einem Regelkolben 20 mit einer Wirkrichtung vom Ablauf 12 zum Zulauf 11 um den Absperrkörper 23 von einer Schließstellung in eine Offenstellung zu bewegen, in der der erste Strömungspfad geöffnet ist und einer Schließfeder 24 mit der Wirkrichtung vom Zulauf 11 zum Ablauf 12 um den Absperrkörper 23 von einer Offenstellung in eine Schließstellung zu bewegen, in der der erste Strömungsweg geschlossen ist wobei Regelkolben 20 den ersten und den zweiten Strömungsweg verbindet und der Regelkolben 20 bei geöffnetem zweiten Strömungsweg einen Druckabfall zwischen der Ventileinrichtung und dem Ablauf der druckbeaufschlagten Seite des Regelkolbens 20 generiert, um den Absperrkörper 23 durch den Regelkolben entgegen der Kraft der Schließfeder 24 und entgegen dem Druck im Ausgang von der Schließstellung in die Offenstellung zu bewegen.

Der hier beschrieben Regelkolben 20 funktioniert damit als ein Regelungsmittel, welches die Differenzdruckkraft aus dem Steuerdruck und dem Ausgangsdruck auf den Absperrkörper 23 überträgt und dadurch das Hauptventil 16 öffnet. Andere Regelungsmittel, wie etwa eine Membran mit Durchlass sind ebenfalls möglich. Ferner funktioniert, der hier beschrieben Durchlass als ein Drosselungsmittel, welche eine Druckdifferenz zwischen dem Steuerdruck und dem Ausgangsdruck ermöglicht. Andere Drosselungsmittel, wie etwa ein poröses Material des Regelkolbens sind ebenfalls denkbar.

## Patentansprüche

1. Druckregler (1) für einen gasförmigen Kraftstoff, insbesondere Wasserstoffgas, umfassend:
einen Einlass (11) für den gasförmigen Kraftstoff bei einem Einlassdruck;
einen Auslass (12) für den gasförmigen Kraftstoff;
ein Hauptventil (16) umfassend einen Hauptventileinlass (17), einen Hauptventilauslass (18), einen Hauptventilnebeneinlass, und einen Regelkolben (20) in einem Gehäuse, der den Kraftstofffluss vom Einlass (11) durch das Hauptventil (16) zum Auslass (12) regelt; und
ein elektronisch ansteuerbares Ventil (22), insbesondere ein Proportionalventil (22), das dazu eingerichtet ist, den Einlassdruck über den Hauptventilnebeneinlass auf den Regelkolben (20) des Hauptventils (16) als Steuerdruck abzugeben und dadurch den Kraftstofffluss, basierend zumindest auf einem Drucksensorsignal zu regeln, das den Druck des gasförmigen Kraftstoffs am Auslass (12) des Druckreglers (1) anzeigt;
wobei das Hauptventil (16) ferner einen Durchlass (21) für den gasförmigen Kraftstoff umfasst, der dazu eingerichtet ist, den Steuerdruck abzubauen, der auf den Regelkolben (20) wirkt und vorzugsweise im Regelkolben und / oder dem Gehäuse angeordnet ist.

2. Druckregler (1) nach Anspruch 1, wobei ein Volumen zwischen einer Oberfläche des Regelkolbens (20) auf die der Steuerdruck wirkt und einem Gehäuse in dem sich der Regelkolben bewegt, im geschlossenen Zustand, in einem Bereich von 100 mm^3 bis 1000 mm^3 liegt, bevorzugt in einem Bereich zwischen 300 mm^3 und 700 mm^3; und / oder wobei ein Volumen einer Verbindungsbohrung vom Auslass des elektronisch ansteuerbaren Ventils zum Nebeneinlass des Hauptventils im Bereich zwischen 40 mm^3 und 500 mm^3, bevorzugt im Bereich zwischen 100 mm^3 und 250 mm^3 liegt; und / oder wobei ein Ausgangsvolumen des elektronisch ansteuerbaren Ventils im Bereich zwischen 400 mm^3 und 1200 mm^3, bevorzugt im Bereich zwischen 650 mm^3 und 950 mm^3 liegt.

3. Druckregler (1) nach einem der Ansprüche 1 oder 2,
wobei ein Durchmesser der Oberfläche des Regelkolbens, die dem Steuerdruck ausgesetzt ist im Bereich von 30 mm bis 50 mm liegt; und / oder
wobei ein Durchmesser einer Oberfläche eines Absperrkörpers des Hauptventils (16), die dem Einlassdruck ausgesetzt ist, im Bereich von 1 mm bis 10 mm liegt, bevorzugt im Bereich von 2 mm bis 6 mm.

4. Druckregler (1) nach einem der Ansprüche 1 bis 3, wobei der Durchlass (21) im Regelkolbenboden, im Umfang des Regelkolbens (20) und/oder als Bypass in einem Führungsringsystem des Kolbens angeordnet ist, und / oder wobei der Durchlass (21) über ein in den Regelkolben integriertes Rückschlagventil, über einen Filter, einen Spalt zwischen Regelkolben und Gehäusewand, über einen oder mehrere Kanäle in der Wand des Regelkolbens oder in der Gehäusewand implementiert ist, und / oder über einen Strömungspad infolge einer Oberflächenrauheit der Wand des Regelkolbens und/ oder der Gehäusewand.

5. Druckregler (1) nach einem der Ansprüche 1 bis 4, wobei der Durchlass (21) ein Drosselelement umfasst, das beeinflusst, wie der Steuerdruck abgebaut wird, wobei das Drosselelement vorzugsweise einstellbar ist.

6. Druckregler (1) nach einem der Ansprüche 1 bis 5, wobei das Hauptventil (16) dazu eingerichtet ist, eine variable Kraftstoffflussrate im Bereich von 0.02 g/s bis 50 g/s einzustellen, wobei der Druck am Auslass (12) in einem Bereich zwischen 1 bar und 60 bar einstellbar ist.

7. Druckregler (1) nach einem der Ansprüche 1 bis 6, ferner umfassend eine Vorrichtung zur Temperaturkontrolle mittels Beheizung und/oder Kühlung.

8. Druckregler (1) nach Anspruch 7, wobei die Vorrichtung zur Temperaturkontrolle Kühlkanäle im Bereich eines Hauptventilkörpers des Hauptventils (16) zur flüssigkeitsbasierten Kühlung des Hauptventils (16) und/oder eine elektrische Heizung zum Beheizen des Hauptventils (16) umfasst.

9. Druckregler (1) nach einem der Ansprüche 1 bis 8, ferner umfassend eine Regelungseinheit, die das elektronisch ansteuerbare Ventil (22), zumindest teilweise basierend auf dem zumindest einen Drucksensorsignal steuert, bevorzugt unter Verwendung von Pulsweitenmodulation.

10. Druckregler (1) nach einem der Ansprüche 1 bis 9, ferner umfassend mindestens einen Temperatursensor (15) zur Temperaturerfassung des gasförmigen Kraftstoffs im Druckregler (1).

11. Druckregler (1) nach einem der Ansprüche 1 bis 10, wobei das elektronisch ansteuerbare Ventil (22) einen maximalen Hub von bis zu 15 mm aufweist, bevorzugt von bis zu 10 mm, noch mehr bevorzugt von bis zu 5 mm.

12. Druckregler (1) nach einem der Ansprüche 1 bis 11, wobei das elektronisch ansteuerbare Ventil (22) dazu eingerichtet ist, Drücke von bis zu 1500 bar, bis zu 1200 bar, bis zu 1000 bar oder bis zu 700 bar in einem Gehäuse des elektronisch ansteuerbaren Ventils aufzunehmen.

13. Druckregler (1) nach einem der Ansprüche 1 bis 12, weiterhin umfassend:
ein Überdruckventil, das im Strömungspfad nach dem Hauptventil (16) angeordnet ist und bei einem Druck öffnet, der größer ist als der regelbare Ausgangsdruck des Druckreglers, bevorzugt bei einem Druck von über 30 bar oder über 70 bar öffnet; und / oder
eine Service Interface Unit, SIU, die im Strömungspfad nach dem Hauptventil (16) angeordnet ist; und / oder
eine elektronisch ansteuerbares Belüftungsventil, das im Strömungspfad nach dem Hauptventil (16) angeordnet ist.

14. Druckregler (1) nach einem der Ansprüche 1 bis 13, weiterhin umfassend:
einen Drucksensor (14) zum Messen eines Drucks des gasförmigen Kraftstoffs am Auslass (12), der das Drucksensorsignal bereitstellt; und / oder
einen Drucksensor (13) zum Messen des Drucks des gasförmigen Kraftstoffs am Einlass (11), der ein weiters Drucksensorsignal bereitstellt, das zum Regeln des Kraftstoffflusses verwendet werden kann; und / oder einen weiteren Drucksensor zum Messen eines Drucks des gasförmigen Kraftstoffs am Auslass (12), der ein weiteres Drucksensorsignal zur Signalabsicherung bereitstellt.

15. Druckregler (1) nach einem der Ansprüche 1 bis 13, wobei alle Ventile des Druckreglers (1) in einer NC-Konfiguration (NC: *normally closed*) vorliegen.
